# EUROPÄISCHE PATENTSCHRIFT

(11) **EP 4 476 461 B1**
(45) Veröffentlichungstag und Bekanntmachung des Hinweises auf die Patenterteilung: **17.06.2026**
(21) Anmeldenummer: 23701229.9
(22) Anmeldetag: 11.01.2023
(51) Int. Cl.: F16C 33/60, F16C 33/76, B60B 27/00, F16C 19/36, F16C 19/38

(54) **RADLAGEREINHEIT FÜR EIN FAHRZEUG**
WHEEL BEARING UNIT FOR A VEHICLE
UNITÉ PALIER DE ROUE POUR VÉHICULE

(30) Priorität: 11.02.2022 DE 102022103258
(43) Veröffentlichungstag der Anmeldung: 18.12.2024
(73) Patentinhaber: Schaeffler Technologies AG & Co. KG, 91074 Herzogenaurach (DE)
(72) Erfinder: SCHRAUT, Lukas, 97440 Werneck (DE); FULL, Walter, 97493 Bergrheinfeld (DE); BAYER, Rudolf, 97437 Hassfurt (DE); MOEBUS, Nils, 96050 Bamberg (DE); BAERENSTECHER, Paul, 97424 Schweinfurt (DE)
(74) Vertreter: Schaeffler Technologies
(86) Internationale Anmeldenummer: PCT/DE2023/100013
(87) Internationale Veröffentlichungsnummer: WO 2023/151737

(56) Entgegenhaltungen:
- DE-A1- 102017 219 007
- JP-A- 2011 148 409
- JP-B2- 6 039 431

## Beschreibung

Die Erfindung betrifft eine Radlagereinheit für ein Fahrzeug, insbesondere eine Radlagereinheit mit einem Kegelrollenlager für ein Nutzfahrzeug, wie ein Lastkraftwagen.

Radlagereinheiten mit vormontiert einpressbaren Wälzlagereinheiten für Nutzfahrzeuge kommen zum Einsatz, wenn eine ordnungsgemäße Installation eines Radlagers, welches in der Regel mindestens aus zwei Radlagereinheiten besteht, nicht in einer Kfz-Werkstatt möglich ist. Für die Installation eines Radlagers sind eine saubere Umgebung und zahlreiche Vorsichtsmaßnahmen bei der ordnungsgemäßen Installation unabkömmlich. Durch Verschmutzung des Wälzraumes verschlechtern sich nicht nur die Eigenschaften, sondern es verringert sich auch die Lebensdauer des Wälzlagers. Beispielsweise sind Radlagereinheiten mit Wälzlagern bekannt, die zwei stirnseitig eng aneinander liegende Innenringe aufweisen. Bei einer ungenügenden Abdichtung der Schnittstelle zwischen den beiden Innenringen kann ungewollt Schmierstoff aus dem Wälzlager austreten oder es können Fremdstoffe in den Wälzlagerraum eintreten. In beiden Fällen ist mit einer Verschlechterung der Eigenschaften und einer Verkürzung der Lagerlebensdauer des Wälzlagers zu rechnen.

Beispielsweise geht aus der DE 10 2018 130 926 A1 eine Radlagereinheit mit mindestens einem Außenring und zumindest zwei Innenringen hervor. Zwei benachbarte Innenringe liegen mit ihren zueinander weisenden axialen Stirnseiten aneinander an, wobei eine Abdichtvorrichtung zur Abdichtung dieser Schnittstelle der beiden Innenringe vorgesehen ist. Die Abdichtvorrichtung ist durch ein ringförmiges Halteelement ausgebildet. An dem Halteelement ist mindestens ein als Dichtring ausgebildetes Dichtelement angeordnet. Der Dichtring weist mindestens zwei Kontaktpunkte auf, die das Halteelement kontaktieren und jeweils mindestens einen Kontaktpunkt, welcher jeweils einen Innenring kontaktiert. Die JP 6 039431 B2 offenbart die Merkmale des Oberbegriffs von Anspruch 1.

Die Aufgabe der vorliegenden Erfindung besteht darin, eine Radlagereinheit weiterzuentwickeln, wobei eine Montage der Radlagereinheit und eine Positionierung des Dichtelements verbessert werden sollen.

Diese Aufgaben werden durch eine Radlagereinheit mit den Merkmalen des Anspruchs 1 gelöst. Bevorzugte oder vorteilhafte Ausführungsformen der Erfindung ergeben sich aus der nachfolgenden Beschreibung sowie den beigefügten Figuren.

Eine erfindungsgemäße Radlagereinheit für ein Fahrzeug, insbesondere für einen Lastkraftwagen, umfasst mindestens einem Außenring und zumindest zwei Innenringe, zwischen denen in einem jeweiligen Käfig geführte Wälzkörper angeordnet sind, wobei zwei benachbarte Innenringe mit ihren zueinander weisenden axialen Stirnseiten an einer Schnittstelle aneinander zur Anlage kommen, wobei eine Abdichtvorrichtung zur Abdichtung der Schnittstelle der beiden Innenringe eingerichtet ist, wobei die Abdichtvorrichtung durch einen Haltering mit mindestens einem Dichtelement ausgebildet ist, wobei der Haltering mehrere in axialer Richtung ausgebildete Stegsegmente, die jeweils eine in radialer Richtung ausgebildete Erhebung aufweisen, umfasst, wobei zumindest einer der zwei benachbarten Innenringe eine Vertiefung in einer Außenumfangsfläche zur zumindest teilweisen Aufnahme der Erhebung am jeweiligen Stegsegment aufweist.

Mit anderen Worten dringt die Erhebung am jeweiligen Stegsegment des Halterings zumindest teilweise oder vollständig radial in die Vertiefung am Innenring ein. Durch das Eindringen, insbesondere Einrasten der Erhebungen in die Vertiefung wird der Haltering mit dem daran angeordneten mindestens einen Dichtelement in axialer Richtung positioniert und fixiert. Beim axialen Aufschieben des Halterings auf die Innenringe federn die Stegsegmente in radialer Richtung nach außen aus, wobei beim Eindringen der Erhebungen in die Vertiefung ein radiales Einfedern in radialer Richtung nach innen erfolgt. Die Einfederbewegung der Stegsegmente ist elastisch, wobei insbesondere die Abmaße und Werkstoffauswahl der Stegsegmente im Wesentlichen für die Elastizität und Steifigkeit verantwortlich sind. Bevorzugt sind der Haltering und die Stegsegmente aus einem Polymerwerkstoff ausgebildet. Vorzugsweise ist das Dichtelement als Dichtring ausgebildet. Bevorzugt können mehrere Dichtringe am Haltering vorgesehen sein. Insbesondere wird das mindestens eine Dichtelement bei der Montage der Radlagereinheit mittels Haltering radial an die Innenringe angepresst und dementsprechend radial verspannt. Diese Position wird mittels der Stegsegmente fixiert, wobei die Montage des Halterings durch die Stegsegmente vereinfacht wird.

Die Abdichtvorrichtung ist vorzugsweise hermetisch abdichtend und selbstsichernd, wobei mit wenig Aufwand ein Eindringen von Fremdstoffen und/oder ein Abwandern von Schmierstoff über die aneinander liegenden Stirnseiten der Innenringe in oder aus denjenigen Raum der Radlagereinheit verhindert, in dem die Wälzkörper angeordnet sind. Vorzugsweise ist die Abdichtvorrichtung in einer gemeinsamen Ringnut der Innenringe angeordnet, welche durch Einsenkungen im Bereich der zueinander weisenden Stirnseiten der Innenringe gebildet ist. Durch das Vorsehen der Abdichtvorrichtung kann eine ausreichende radiale Verspannung des Dichtelementes ermöglicht werden. Zudem werden durch die Einsenkungen Kanten am jeweiligen Innenring ausgebildet, welche zusätzlich zur Ausrichtung, Zentrierung und Positionierung der Abdichtvorrichtung dienen können.

Gemäß einer bevorzugten Ausführungsform ist die Vertiefung als umlaufende Nut in der Außenumfangsfläche eines der zwei benachbarten Innenringe ausgebildet. Mithin nimmt eine einzige Vertiefung alle Erhebungen auf. Eine nutförmige Vertiefung kann besonders einfach und kostengünstig in die Außenumfangsfläche des Innenrings ausgebildet werden, beispielsweise durch spanabhebende Verfahren. Insbesondere weist die Vertiefung einen rechteckförmigen Querschnitt auf. Bevorzugt sind die Kanten der Vertiefung abgerundet.

Gemäß einer bevorzugten Ausführungsform sind die Stegsegmente einteilig am Haltering ausgebildet und in Umfangsrichtung gleichmäßig verteilt am Haltering angeordnet. Somit sind der Haltering und die Stegsegmente monolithisch ausgebildet. Durch die gleichmäßige Verteilung der Stegsegmente und somit auch der Erhebungen wird der Haltering im Betrieb der Radlagereinheit sicher positioniert und gleichmäßig gut gehalten.

Erfindungsgemäß ist die jeweilige Erhebung einteilig an einem Mittelabschnitt des jeweiligen Stegsegments ausgebildet, wobei ein Zentrierabschnitt einteilig an dem Mittelabschnitt ausgebildet ist und sich in axialer Richtung weg von dem Haltering erstreckt. Demnach ist das jeweilige Stegsegment aus einem am Haltering angebundenen Mittelabschnitt und einem am Mittelabschnitt angebundenen Zentrierabschnitt ausgebildet. Alternativ kann der Zentrierabschnitt entfallen (nicht beansprucht). Vorzugsweise grenzt der Zentrierabschnitt in axialer Richtung unmittelbar an der Erhebung an. Vorzugsweise ist der Mittelabschnitt mindestens 3,5mm bis 9,5mm lang, um eine einfache Montage und ein sicheres Positionieren zu ermöglichen. Bevorzugt ist der Zentrierabschnitt mindestens 0,1mm bis 5mm lang, um die Montage durch eine schnellere und bessere Zentrierung des Halterings am Innenring weiter zu vereinfachen. Mithin beträgt die axiale Gesamtlänge des jeweiligen Stegsegments mindestens 3,5mm bis höchstens 14,5mm ohne axiale Überdeckung mit dem Haltering.

Gemäß einer bevorzugten Ausführungsform weist ein jeweiliger Übergangsbereich zwischen dem Haltering und dem jeweiligen Stegsegment eine abgerundete Kontur auf, wobei diese abgerundete Kontur mindestens 18% bis höchstens 40% einer Länge des Mittelabschnitts des jeweiligen Stegsegments ausmacht. Mit anderen Worten ist das jeweilige Stegsegment über den jeweiligen Übergangsbereich mit dem Haltering verbunden. Durch die Übergangsbereiche wird insbesondere die Steifigkeit der Stegsegmente gesteuert, wobei durch Verformung ein axiales Aufschieben der Erhebungen über die Stirnseite und Außenumfangsfläche des Innenringes und ein Einrasten in die Vertiefung ermöglicht werden. Insbesondere ist ein Übergangsbereich zwischen Stirnseite und Außenumfangsfläche des Innenrings abgerundet oder abgestumpft, insbesondere rampenförmig ausgebildet, um das Aufschieben des Halterings zu vereinfachen. Der Übergangsbereich zwischen dem Haltering und dem jeweiligen Stegsegment ist Teil des Mittelabschnitts und erstreckt sich über mindestens 18% bis höchstens 40% der axialen Länge des Mittelabschnitts. Beispielsweise wird die abgerundete Kontur am Haltering durch einen Radius von mindestens 0,5mm bis 3mm ausgebildet. Dieser Radius ist insbesondere auf die Materialeigenschaften des Werkstoffs des Halterings abgestimmt, um eine entsprechende Verformung für die Montage zu ermöglichen und trotzdem eine ausreichend hohe radiale Kraft zum Einrasten der Stegsegmente zu gewährleisten.

Gemäß einer bevorzugten Ausführungsform weist die Erhebung eine abgerundete Kontur auf. Beispielsweise weist die Erhebung einen rechteckigen Querschnitt mit abgerundeten Ecken auf. Beispielsweise ist die Erhebung in Umfangsrichtung zylindrisch mit einem halbkreisförmigen Querschnitt oder einem rechteckigen Querschnitt mit abgerundeten Ecken ausgebildet. Alternativ ist die Erhebung halbkugelförmig ausgebildet. Insbesondere ist die Querschnittsfläche der Vertiefung im Wesentlichen komplementär zur Querschnittsfläche der Erhebung ausgebildet. Vorzugsweise ist die Vertiefung geringfügig größer als die Erhebung ausgebildet, um ein leichteres Eindringen und Einrasten der Erhebung zu ermöglichen. Insbesondere weist die Vertiefung dazu abgerundete Ecken auf. Insbesondere sind diese abgerundeten Ecken, insbesondere die oberen Kanten der nutförmigen Vertiefung geometrisch derart gestaltet, dass die Erhebungen unter den Betriebslasten möglichst schwer aus der Vertiefung schnappen kann und das mindestens eine Dichtelement axial positioniert bleibt.

Beispielsweise beträgt das Abmaß der Erhebung in axialer Richtung mindestens 12% bis höchstens 45% der axialen Länge des Mittelabschnitts des jeweiligen Stegsegments. Dadurch wird insbesondere ein sicherer axialer Halt in der Vertiefung gefördert. Bevorzugt beträgt das Abmaß der Erhebung in axialer Richtung mindestens 20% bis höchstens 36% der axialen Länge des Mittelabschnitts des jeweiligen Stegsegments. Insbesondere beträgt das Abmaß der Erhebung in axialer Richtung mindestens 0,5mm bis höchstens 3,5mm, bevorzugt mindestens 1,5mm bis 2,5mm.

Gemäß einer bevorzugten Ausführungsform bildet das jeweilige Stegsegment einen ersten axialen Anschlag für das mindestens eine Dichtelement aus, wobei der Haltering mehrere Anschlagelemente als zweite axiale Anschläge für das mindestens eine Dichtelement aufweist. Mithin ist das mindestens eine Dichtelement axial zwischen den Stegsegmenten und Anschlagelementen positioniert. Insbesondere sind die Stegsegmente und Anschlagelemente in Umfangsrichtung abwechseln angeordnet.

Gemäß einer bevorzugten Ausführungsform weist die Vertiefung eine Tiefe von zumindest 0,5% bis höchstens 10% eines Außendurchmessers des jeweiligen Innenrings auf. Mithin erstreckt sich die Vertiefung in radialer Richtung um 0,5% bis höchstens 10% des Außendurchmessers des jeweiligen Innenrings in die Außenumfangsfläche des Innenrings hinein. Dadurch wird insbesondere ein ausreichend Platz in radialer Richtung zum Eindringen der Erhöhung und ein sicherer axialer Halt der Erhöhung in der Vertiefung gefördert. Bevorzugt weist die Vertiefung eine Tiefe von zumindest 1,5% bis höchstens 7% eines Außendurchmessers des jeweiligen Innenrings auf.

Gemäß einer bevorzugten Ausführungsform weist der jeweilige Innenring einen Außendurchmesser von 59mm bis 140mm auf, wobei der Haltering einen Außendurchmesser von 65mm bis 160mm aufweist. Mithin ist die Radlagereinheit für Nutzfahrzeuge, insbesondere Lastkraftwagen vorgesehen. Bevorzugt weist der jeweilige Innenring einen Außendurchmesser von 80mm bis 120mm auf. Bevorzugt weist der Haltering einen Außendurchmesser von 88mm bis 140mm auf.

Gemäß einer bevorzugten Ausführungsform verjüngt sich das jeweilige Stegsegment zumindest teilweise in axialer Richtung. Beispielsweise verjüngt sich das jeweilige Stegsegment in Umfangsrichtung, also derart, dass eine Breite des jeweiligen Stegsegments mit zunehmendem Abstand vom Haltering abnimmt. Beispielsweise verjüngt sich das jeweilige Stegsegment in radialer Richtung, also derart, dass eine Höhe des jeweiligen Stegsegments mit zunehmendem Abstand vom Haltering abnimmt. Beispielsweise verjüngt sich das jeweilige Stegsegment in einem Winkel von maximal 45°, bevorzugt in einem Winkel von maximal 25°. Somit beträgt ein Winkel zwischen zwei aufeinander zulaufenden Kanten maximal 45°, bevorzugt maximal 25°. Vorzugsweise sind alle Stegsegmente identisch ausgebildet.

Weitere die Erfindung verbessernde Maßnahmen werden nachstehend gemeinsam mit der Beschreibung bevorzugter Ausführungsbeispiele der Erfindung anhand der Figuren näher dargestellt. Hierbei zeigt
- Figur 1: eine schematische Schnittdarstellung einer erfindungsgemäßen Radlagereinheit mit einer Abdichtvorrichtung gemäß einer ersten Ausführungsform,
- Figur 2: eine vergrößerte schematische Schnittdarstellung der Abdichtvorrichtung gemäß der ersten Ausführungsform,
- Figur 3: eine vergrößerte schematische Schnittdarstellung einer erfindungsgemäßen Abdichtvorrichtung gemäß einer zweiten Ausführungsform, und
- Figur 4: ein schematisches Perspektivschnittdarstellung der Abdichtvorrichtung gemäß der ersten Ausführungsform.

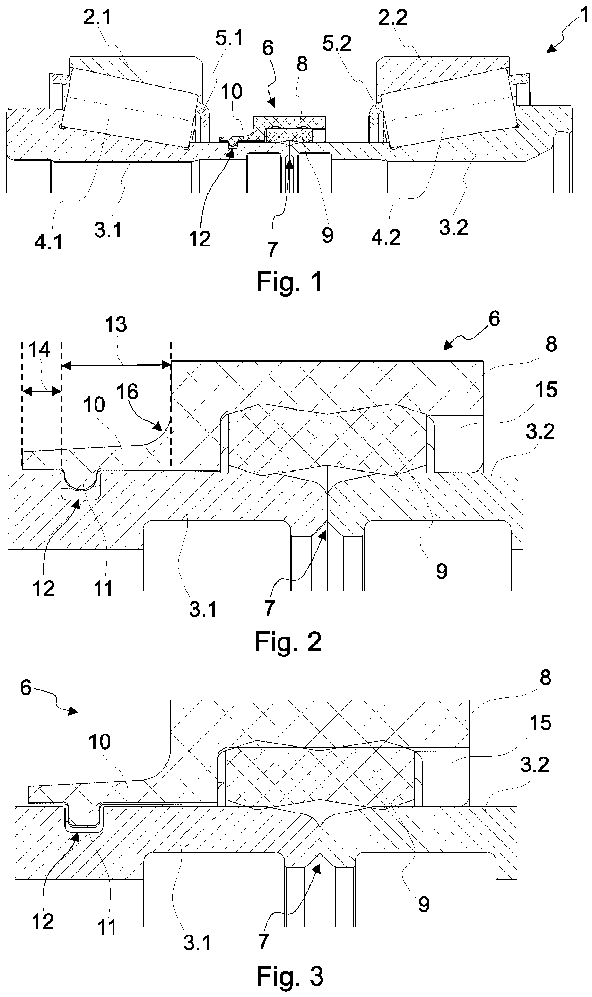

Figur 1 zeigt einen Längsschnitt durch eine erfindungsgemäße Radlagereinheit 1. Die Radlagereinheit 1 ist als zweireihiges Kegelrollenlager ausgeführt und umfasst zwei Außenringe 2.1, 2.2 und zwei Innenringe 3.1, 3.2 zwischen denen in einem jeweiligen Käfig 5.1, 5.2 geführte Wälzkörper 4.1, 4.2 angeordnet sind. Die Wälzkörper 4.1, 4.2 sind als Kegelrollen ausgebildet und wälzen auf jeweiligen Laufbahnen, die am jeweiligen Außenring 2.1, 2.2 und am jeweiligen Innenring 3.1, 3.2 ausgebildet sind, ab. Die beiden Innenringe 3.1, 3.2 liegen mit jeweils einer ihrer beiden Stirnseiten aneinander an und bilden somit eine Schnittstelle 7 aus. Zur Abdichtung dieser Schnittstelle 7 ist eine Abdichtvorrichtung 6 vorgesehen. Die Abdichtvorrichtung 6 besteht aus einem Haltering 8 mit einem Dichtelement 9. Der Haltering 8 weist mehrere in axialer Richtung ausgebildete Stegsegmente 10 auf, die jeweils eine in radialer Richtung ausgebildete Erhebung 11 aufweisen. Einer der beiden Innenringe 3.1 weist eine Vertiefung 12 in einer Außenumfangsfläche auf, wobei die Erhebung 11 am jeweiligen Stegsegment 10 im montierten Zustand der Radlagereinheit 1 in der Vertiefung 12 am Innenring 3.1 aufgenommen ist. Dadurch wird das Dichtelement 9 an der Schnittstelle 7 positioniert und axial gehalten, um ein Eindringen von Fremdkörpern und ein Auslaufen von Schmiermittel durch die Schnittstelle 7 zu verhindern. Die Radlagereinheit 1 ist für einen Lastkraftwagen vorgesehen, wobei der jeweilige Innenring 3.1, 3.2 einen Außendurchmesser von 59mm bis 140mm aufweisen kann, wobei ferner der Haltering 8 einen Außendurchmesser von 65mm bis 160mm aufweisen kann.

In Figur 2 ist ein vergrößerter Ausschnitt der erfindungsgemäßen Radlagereinheit 1 gezeigt, wobei die Abdichtvorrichtung 6 im Fokus steht. Wie aus Figur 2 zu erkennen ist, bilden die beiden Innenringe 3.1, 3.2 eine Ringnut aus, die durch eine entsprechende Einsenkung an der zur Stirnseite angrenzenden Bereich der Außenumfangsfläche in den beiden Innenringen 3.1, 3.2 ausgebildet ist. Durch die Absenkung am Innenring 3.1 wird die Montage des Halterings 8 erleichtert. Das Dichtelement 9 besteht aus einem gummielastischem Material und weist zwei Kontaktpunkte auf, welche den Haltering 8 kontaktieren und jeweils einen Kontaktpunkt, welcher jeweils einen Innenring 3.1, 3.2 kontaktiert. Mittels dieser Ausbildung wird das Dichtelement 9 im montierten Zustand radial an die Innenringe 3.1, 3.2 angepresst und dementsprechend radial verspannt. Dies hat den Vorteil, dass auch bei einer axialen Verschiebung der Innenringe 3, die radiale Abdichtung bzw. das radiale Verspannen des Dichtelementes 9 unberührt bleibt. Die Stegsegmente 10 sind einteilig am Haltering 8 ausgebildet. Das jeweilige Stegsegment 10 wird aus einem Mittelabschnitt 13 mit Erhebung 11 und einem Zentrierabschnitt 14 gebildet. Die Erhebung 11 ist einteilig an dem Mittelabschnitt 13 des jeweiligen Stegsegments 10 ausgebildet, wobei der Zentrierabschnitt 14 einteilig an dem Mittelabschnitt 13 ausgebildet ist und sich in axialer Richtung weg von dem Haltering 8 erstreckt. Mithin ist der Haltering 8 monolithisch, wobei dieser bevorzugt aus einem Kunststoff durch Spritzgießen ausgebildet wird. Der Zentrierabschnitt 14 grenzt in axialer Richtung an die Erhebung 11 an. Der Mittelabschnitt 13 kann 3,5mm bis 9,5mm lang sein. Der Zentrierabschnitt 14 kann 0,1mm bis 5mm lang sein. Mithin kann das jeweilige Stegsegment 10 eine axiale Länge von 3,5 bis 14,5mm ohne eine axiale Überdeckung mit dem Haltering 8 aufweisen. Das jeweilige Stegsegment 10 weist einen ersten axialen Anschlag für das Dichtelement 9 auf. Der Haltering 8 weist mehrere Anschlagelemente 15 auf, die als zweite axiale Anschläge für das Dichtelement 9 vorgesehen sind. Zwischen dem Haltering 8 und dem jeweiligen Stegsegment 10 ist ein Übergangsbereich 16 mit einer abgerundeten Kontur ausgebildet, wobei der Übergangsbereich 16 18% bis 40% einer Länge des Mittelabschnitts 13 des jeweiligen Stegsegments 10 aufweisen kann. Ein Radius des Übergangsbereichs 16 kann 0,5mm bis 3mm betragen. Durch diese Abmaße wird insbesondere die Steifigkeit der Stegsegmente 10 bestimmt. Die Vertiefung 12 ist als umlaufende Nut in der Außenumfangsfläche des Innenrings 3.1 ausgebildet und nimmt die Erhebung 11 fast vollständig auf. Vorliegend weist die Erhebung 11 eine abgerundete Kontur auf, wobei die abgerundete Kontur im Wesentlichen zylindrisch mit halbkreisförmigen Querschnitt ausgebildet ist. Das Abmaß der Erhebung 11 kann in axialer Richtung 12% bis 45% der Länge des Mittelabschnitts 13 des jeweiligen Stegsegments 10 betragen. Das jeweilige Stegsegment 10 verjüngt sich in axialer Richtung derart, dass die Höhe mit zunehmendem Abstand vom Haltering 8 abnimmt.

Eine Abstimmung der Geometrien und Abmaße des Halterings 8 ist für den Montageprozess vorteilhaft, um diesen effizienter zu gestalten. Bei der Montage der Abdichtvorrichtung 6 wird zunächst der Haltering 8 mit Dichtelement 9 auf den Innenring 3.1 aufgepresst. Sobald die Endposition des Halterings 8 erreicht ist, schnappen die Stegsegmente 10 mit der jeweiligen Erhebung 11 in die nutförmige Vertiefung 12 des Innenrings 3.1 ein und der Haltering 8 mit dem Dichtelement 9 ist somit axial fixiert. Danach wird der Innenring 3.2 unter das Dichtelement 9 axialer eingeschoben. Die Kraft in axialer Richtung, welche durch den Innenring 3.2 auf das Dichtelement 9 durch Überdeckung ausgeübt wird, ist kleiner, als die axiale Kraft, welche nötig ist, um die Erhebungen 11 radial aus der Vertiefung 12 im Innenring 3.1 herauszudrücken.

Insbesondere wird die radiale Kraft der Stegsegmente 10, die im Wesentlichen über den jeweiligen Übergangsbereich 16 eingestellt wird, derart groß gewählt, dass ein Ausrasten der Erhebungen 11 aus der Vertiefung 12 des Innenring 3.1 vermieden wird. Ferner realisiert die geometrische Gestaltung der Erhebungen 11 und Vertiefung 12 ebenso wie die Geometrie und Abmaße der Stegsegmente 10 ebenfalls, dass die Erhebungen 11 unter den Betriebslasten möglichst schwer aus der Vertiefung 12 schnappen können und das Dichtelement 9 axial positioniert bleibt.

Figur 3 zeigt eine zweite Ausführungsform der Abdichtvorrichtung 6. Die Abdichtvorrichtung 6 gemäß der zweiten Ausführungsform unterscheidet sich von der Abdichtvorrichtung 6 gemäß der ersten Ausführungsform durch eine andere Geometrie der Erhebung 11. Die Erhebung 11 gemäß Figur 3 weist auch eine abgerundete Kontur auf, jedoch weist die abgerundete Kontur keinen halbkreisförmigen Querschnitt, sondern einen rechteckigen Querschnitt mit abgerundeten Ecken auf. Weitere abgerundete Konturen für die Erhebung 11, beispielsweise eine Halbkugel, sind ebenfalls vorteilhaft. Ansonsten entspricht die Abdichtvorrichtung 6 gemäß der zweiten Ausführungsform der Abdichtvorrichtung 6 gemäß der ersten Ausführungsform, auf die hier Bezug genommen wird.

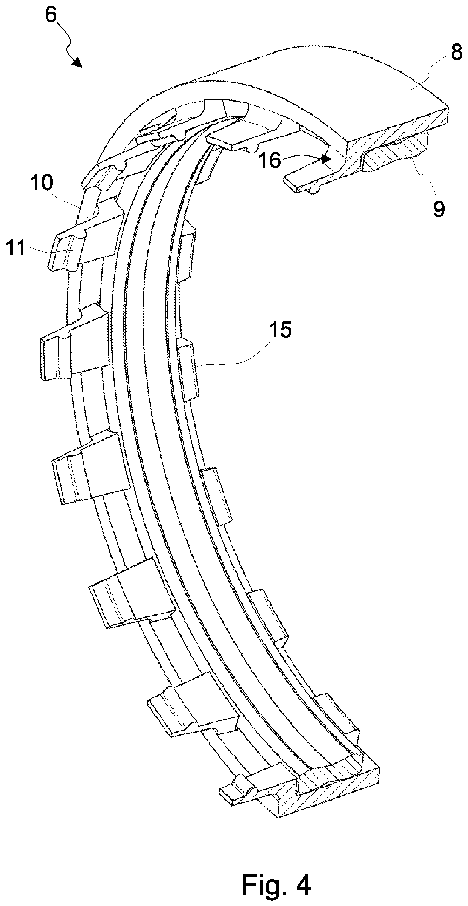

In Figur 4 ist die erste Ausführungsform der Abdichtvorrichtung 6 perspektivisch sowie geschnitten dargestellt. Aus Figur 4 geht hervor, dass die Stegsegmente 10 in Umfangsrichtung gleichmäßig verteilt am Haltering 8 angeordnet sind. Ferner sind auch die Anschlagelemente 15 gleichmäßig verteilt am Haltering 8 angeordnet, wobei das als Dichtring ausgebildete Dichtelement 9 axial zwischen den Stegsegmenten 10 und den Anschlagelementen 15 angeordnet ist. Insbesondere ist auch die abgerundete Kontur des Übergangsbereichs 16 zwischen dem Haltering 8 und dem jeweiligen Stegsegment 10 sowie die sich in Umfangsrichtung zylindrisch bzw. zumindest teilweise ringförmig erstreckende Erhebung 11 am jeweiligen Stegsegment 10 zu erkennen. Ferner verjüngt sich das jeweilige Stegsegment 10 nicht nur in axialer Richtung, sondern auch in Umfangsrichtung, also derart, dass die Breite des jeweiligen Stegsegments 10 mit zunehmendem Abstand vom Haltering 8 abnimmt.

### Bezugszeichenliste

- 1: Radlagereinheit
- 2.1: Außenring
- 2.2: Außenring
- 3.1: Innenring
- 3.2: Innenring
- 4.1: Wälzkörper
- 4.2: Wälzkörper
- 5.1: Käfig
- 5.2: Käfig
- 6: Abdichtvorrichtung
- 7: Schnittstelle
- 8: Haltering
- 9: Dichtelement
- 10: Stegsegment
- 11: Erhebung
- 12: Vertiefung
- 13: Mittelabschnitt
- 14: Zentrierabschnitt
- 15: Anschlagelemente
- 16: Übergangsbereich

## Patentansprüche

1. Radlagereinheit (1) für ein Fahrzeug mit mindestens einem Außenring (2.1, 2.2) und zumindest zwei Innenringen (3.1, 3.2), zwischen denen in einem jeweiligen Käfig (5.1, 5.2) geführte Wälzkörper (4.1, 4.2) angeordnet sind, wobei zwei benachbarte Innenringe (3.1, 3.2) mit ihren zueinander weisenden axialen Stirnseiten an einer Schnittstelle (7) aneinander zur Anlage kommen, wobei eine Abdichtvorrichtung (6) zur Abdichtung der Schnittstelle (7) der beiden Innenringe (3.1, 3.2) eingerichtet ist, wobei die Abdichtvorrichtung (6) durch einen Haltering (8) mit mindestens einem Dichtelement (9) ausgebildet ist, wobei
der Haltering (8) mehrere in axialer Richtung ausgebildete Stegsegmente (10), die jeweils eine in radialer Richtung ausgebildete Erhebung (11) aufweisen, umfasst, wobei zumindest einer der zwei benachbarten Innenringe (3.1, 3.2) eine Vertiefung (12) in einer Außenumfangsfläche zur zumindest teilweisen Aufnahme der Erhebung (11) am jeweiligen Stegsegment (10) aufweist, **dadurch gekennzeichnet, dass** die jeweilige Erhebung (11) einteilig an einem Mittelabschnitt (13) des jeweiligen Stegsegments (10) ausgebildet ist, wobei ein Zentrierabschnitt (14) einteilig an dem Mittelabschnitt (13) ausgebildet ist und sich in axialer Richtung weg von dem Haltering (8) erstreckt.

2. Radlagereinheit (1) nach Anspruch 1,
**dadurch gekennzeichnet, dass** die Vertiefung (12) als umlaufende Nut in der Außenumfangsfläche eines der zwei benachbarten Innenringe (3.1, 3.2) ausgebildet ist.

3. Radlagereinheit (1) nach einem der vorhergehenden Ansprüche,
**dadurch gekennzeichnet, dass** die Stegsegmente (10) einteilig am Haltering (8) ausgebildet und in Umfangsrichtung gleichmäßig verteilt am Haltering (8) angeordnet sind.

4. Radlagereinheit (1) nach einem der vorhergehenden Ansprüche,
**dadurch gekennzeichnet, dass** ein jeweiliger Übergangsbereich (16) zwischen dem Haltering (8) und dem jeweiligen Stegsegment (10) eine abgerundete Kontur aufweist und mindestens 18% bis höchstens 40% einer Länge des Mittelabschnitts (13) des jeweiligen Stegsegments (10) aufweist.

5. Radlagereinheit (1) nach einem der vorhergehenden Ansprüche,
**dadurch gekennzeichnet, dass** die Erhebung (11) eine abgerundete Kontur aufweist.

6. Radlagereinheit (1) nach einem der vorhergehenden Ansprüche,
**dadurch gekennzeichnet, dass** das jeweilige Stegsegment (10) einen ersten axialen Anschlag für das mindestens eine Dichtelement (9) ausbildet, wobei der Haltering (8) mehrere Anschlagelemente (15) als zweite axiale Anschläge für das mindestens eine Dichtelement (9) aufweist.

7. Radlagereinheit (1) nach einem der vorhergehenden Ansprüche,
**dadurch gekennzeichnet, dass** die Vertiefung eine Tiefe von zumindest 0,5% bis höchstens 10% eines Außendurchmessers des jeweiligen Innenrings (3.1, 3.2) aufweist.

8. Radlagereinheit (1) nach einem der vorhergehenden Ansprüche,
**dadurch gekennzeichnet, dass** der jeweilige Innenring (3.1, 3.2) einen Außendurchmesser von 59mm bis 140mm aufweist, wobei der Haltering (8) einen Außendurchmesser von 65mm bis 160mm aufweist.

9. Radlagereinheit (1) nach einem der vorhergehenden Ansprüche,
**dadurch gekennzeichnet, dass** das jeweilige Stegsegment (10) sich zumindest teilweise in axialer Richtung verjüngt.

## Claims

1. A wheel bearing unit (1) for a vehicle having at least one outer ring (2.1, 2.2) and at least two inner rings (3.1, 3.2), between which rolling elements (4.1, 4.2) guided in a respective cage (5.1, 5.2) are arranged, wherein two adjacent inner rings (3.1, 3.2) come into contact with each other with their mutually facing axial end faces at an interface (7), wherein a sealing device (6) is provided for sealing the interface (7) of the two inner rings (3.1, 3.2), wherein the sealing device (6) is formed by a retaining ring (8) having at least one sealing element (9), wherein
the retaining ring (8) comprises a plurality of axially formed web segments (10), each of which has a radially formed projection (11), wherein at least one of the two adjacent inner rings (3.1, 3.2) has a recess (12) in an outer circumferential surface for at least partially receiving the projection (11) on the respective web segment (10), **characterised in that** the respective projection (11) is formed in one piece on a central section (13) of the respective web segment (10), wherein a centering section (14) is formed in one piece on the central section (13) and extends in the axial direction away from the retaining ring (8).

2. The wheel bearing unit (1) according to claim 1,
**characterised in that** the recess (12) is formed as a circumferential groove in the outer circumferential surface of one of the two adjacent inner rings (3.1, 3.2).

3. The wheel bearing unit (1) according to any one of the preceding claims,
**characterised in that** the web segments (10) are formed in one piece on the retaining ring (8) and are arranged evenly distributed in the circumferential direction on the retaining ring (8).

4. The wheel bearing unit (1) according to any one of the preceding claims,
**characterised in that** a respective transition area (16) between the retaining ring (8) and the respective web segment (10) has a rounded contour and has at least 18% to at most 40% of the length of the central section (13) of the respective web segment (10).

5. The wheel bearing unit (1) according to any one of the preceding claims,
**characterised in that** the projection (11) has a rounded contour.

6. The wheel bearing unit (1) according to any one of the preceding claims,
**characterised in that** the respective web segment (10) forms a first axial stop for the at least one sealing element (9), wherein the retaining ring (8) has a plurality of stop elements (15) as second axial stops for the at least one sealing element (9).

7. The wheel bearing unit (1) according to any one of the preceding claims,
**characterised in that** the recess has a depth of at least 0.5% to at most 10% of the outer diameter of the respective inner ring (3.1, 3.2).

8. The wheel bearing unit (1) according to any one of the preceding claims,
**characterised in that** the respective inner ring (3.1, 3.2) has an outer diameter of 59 mm to 140 mm, wherein the retaining ring (8) has an outer diameter of 65 mm to 160 mm.

9. The wheel bearing unit (1) according to any one of the preceding claims,
**characterised in that** the respective web segment (10) tapers at least partially in the axial direction.

## Revendications

1. Unité palier de roue (1) pour un véhicule comportant au moins une bague extérieure (2.1, 2.2) et au moins deux bagues intérieures (3.1, 3.2), entre lesquelles sont disposés des éléments roulants (4.1, 4.2) guidés dans une cage (5.1, 5.2) respective, deux bagues intérieures (3.1, 3.2) adjacentes étant en appui l'une sur l'autre par leurs faces frontales axiales en regard au niveau d'une interface (7), un dispositif d'étanchéité (6) étant conçu pour assurer l'étanchéité de l'interface (7) entre les deux bagues intérieures (3.1, 3.2), le dispositif d'étanchéité (6) étant formé d'une bague de retenue (8) comportant au moins un élément d'étanchéité (9),
la bague de retenue (8) comprenant plusieurs segments de pont (10) formés dans la direction axiale, qui présentent respectivement une saillie (11) formée dans la direction radiale, au moins l'une des deux bagues intérieures (3.1, 3.2) adjacentes présentant un évidement (12) dans une surface circonférentielle extérieure pour recevoir au moins partiellement la saillie (11) sur le segment de pont (10) respectif, **caractérisée en ce que** la saillie (11) respective est formée d'une seule pièce sur une section centrale (13) du segment de pont (10) respectif, une section de centrage (14) étant formée d'une seule pièce sur la section centrale (13) et s'étendant dans une direction axiale en s'éloignant de la bague de retenue (8).

2. Unité palier de roue (1) selon la revendication 1,
**caractérisée en ce que** l'évidement (12) est formé comme une rainure circonférentielle dans la surface circonférentielle extérieure de l'une des deux bagues intérieures (3.1, 3.2) adjacentes.

3. Unité palier de roue (1) selon l'une quelconque des revendications précédentes, **caractérisée en ce que** les segments de pont (10) sont formés d'une seule pièce sur la bague de retenue (8) et sont disposés de manière à être uniformément répartis, dans la direction circonférentielle, sur la bague de retenue (8).

4. Unité palier de roue (1) selon l'une quelconque des revendications précédentes, **caractérisée en ce qu'**une zone de transition (16) respective entre la bague de retenue (8) et le segment de pont (10) respectif présente un contour arrondi et présente au moins 18 % à maximum 40 % d'une longueur de la section centrale (13) du segment de pont (10) respectif.

5. Unité palier de roue (1) selon l'une quelconque des revendications précédentes, **caractérisée en ce que** la saillie (11) présente un contour arrondi.

6. Unité palier de roue (1) selon l'une quelconque des revendications précédentes, **caractérisée en ce que** le segment de pont (10) respectif forme une première butée axiale pour l'au moins un élément d'étanchéité (9), la bague de retenue (8) présentant plusieurs éléments de butée (15) comme secondes butées axiales pour l'au moins un élément d'étanchéité (9).

7. Unité palier de roue (1) selon l'une quelconque des revendications précédentes, **caractérisée en ce que** l'évidement présente une profondeur d'au moins 0,5 % à maximum 10 % d'un diamètre extérieur de la bague intérieure (3.1, 3.2) respective.

8. Unité palier de roue (1) selon l'une quelconque des revendications précédentes, **caractérisée en ce que** la bague intérieure (3.1, 3.2) respective présente un diamètre extérieur de 59 mm à 140 mm, la bague de retenue (8) présentant un diamètre extérieur de 65 mm à 160 mm.

9. Unité palier de roue (1) selon l'une quelconque des revendications précédentes, **caractérisée en ce que** le segment de pont (10) respectif s'amincit au moins partiellement dans la direction axiale.
